# EUROPEAN PATENT APPLICATION

(11) **EP 1 876 530 A1**
(43) Date of publication of application: **09.01.2008**
(21) Application number: 06300759.5
(22) Date of filing: 06.07.2006
(51) Int. Cl.: G06F 9/50

(54) **Method for dynamic collaboration, a computer software product, a network element, and a distributed system with instrumentation and nomadic objects**

(71) Applicant: Alcatel Lucent, 75008 Paris (FR)
(72) Inventor: Szabo, Dr. Peter, 75180 Pforzheim (DE); Rössler, Horst, 70794 Filderstadt (DE); Hoche, Dr. Michael, 88090 Immenstaad (DE)
(74) Representative: Rausch, Gabriele

(57) **Abstract**

The invention concerns a method for dynamic collaboration by means of transforming a computer program (S, C) within a distributed system hosted at multiple sites, the method comprising the steps of instrumentation a target site by transferring a part (P1', ..., P3') of said computer program from a source site to the target site, where said part collaborates with a remaining part of the computer program, where the part (P1", ..., P3") is identified while the computer product is already running, where the part is separated from the remaining part of the computer program, where interfaces of the part and the remaining part are modified such that the part can be hosted on the target site and can interact with the remaining part, and where the part is transferred and integrated (P1, ..., P3) in a part of the computer program that is hosted on the target site.

The invention also concerns a respective computer software product, a network element, and a distributed system.

## Description

This invention relates to a method for dynamic collaboration by means of transforming a computer program. The invention also concerns a respective computer software product, a network element, and a distributed system.

Software systems have to adapt to users, to environments, to change, to failure, with minimal user intervention and without interruption to the services they provide. Networks adapt to changing configurations of participating devices. Devices adapt communication protocols to those of nearby devices, to user and application requirements, and to environmental conditions. Software systems themselves adapt when things go wrong, diagnosing and responding to problems by taking an alternative approach, rolling back to a consistent state, or taking another corrective action.

Conversely, the localization of parts of software systems seems not so adaptable. For instance page centric applications with client- and server-side nested objects, platform-independent widgets, like wx-widgets, virtual machines like JVM, multi tier architectures have a strict client-server-decomposition. This client-server-decomposition is somehow static and in-efficient with respect to reactivity-, intercommunication-, and computation-optimization.

Page centric web applications with client- and server-side nested objects are well known. Rendering engines like Geco render at a client a visual presentation. Java Applets and Servlets provide enhanced widgets sets for user interaction but do not provide per default a server-side synchronization nor a clever load balancing. Earlier, X servers provided widget sets with call backs triggered by an event mechanism where the decomposition was also almost static.

There is an upcoming trend in using platform-independent widgets, like wx-widgets. This trend of instrumenting a client is for instance illustrated in http://www.wxwidgets.org/, that provides graphical rendering capabilities. Interaction is performed on client side and is triggered/controlled by the HTML -server coded inside xml/html mark-ups.

Continuation based Web development is known as a way to provide stateful applications on the web, which by its nature is stateless. Traditionally, this has been achieved by tracking a single more static "session" attached to each user, but this approach had difficulties with the way users interact with the web. By using continuations instead of sessions, many of the difficulties involving things like the back button and session forking simply cease to exist.

Nevertheless, the client-server-decomposition remains static and in-efficient with respect to reactivity, intercommunication, and computation. High reactivity at the client and load balancing between a client and a server seems to be impossible.
When regarding instrumentation of a client similarly a fix program like a plug-in is installed at a client before running.

The disadvantage is that the composition and the location of an application has to be determined before execution. The composition and the localization influences each other hence it is a major disadvantage to determine this fix.

This problem is solved by a method for dynamic collaboration by means of transforming a computer program within a distributed system hosted at multiple sites, where the method comprising the steps of instrumentation a target site by transferring a part of said computer program from a source site to the target site, where said part collaborates with the remaining part of the computer program, where the part is identified while the computer product is already running, and where the part is separated from the remaining part of the computer program, where the interfaces of the part and the remaining part are modified such that the part can be hosted on the target site, and where the part is transferred and integrated in a part of the computer program that is hosted on the target site.

The problem is solved by a computer software product comprising a computer program comprising parts that can collaborate within a distributed system hosted at multiple sites, where a target site can be instrumented by transferring a part of said computer program from a source site to the target site, where the computer software product comprises computer program that is adapted to perform the steps of the method above.

Correspondingly, a network element like a personal computer or a computer server comprising this computer software product, or a whole distributed system of network elements solves the problem.

In other words: the invention is a self optimizing architecture, especially suited for unrestricted web applications. The goal is reached by generalizing the communication by delegating program parts between the communicating entities. The communication protocol has to cope with a morphing communication interface, and the communication protocol has to ensure that client and server in this example are tight synchronized as a whole.

Server and client remain in a meta dialog, where their configuration (or instrumentation) is changed, i.e. the application decomposition is changed in a decomposition phase. Such a decomposition is triggered by observations that can be measured during client server interactions. To make the re-decomposition happen it is necessary in a third phase to transfer components, i.e. several parts.

The main feature is the exchange and the allocation of (mobile) components (parts), sometimes also called nomadic code or nomadic objects, of an application. Preferably a web application configures (instruments) a client (e.g. a browser), initially. Events (i.e. interaction) drive communication and cause further events. Such observed events might trigger a coordination (decomposition) that minimizes e.g. expensive intercommunication or maximizes reactivity of the application. The state of such an application has to be maintained distributed using e.g. continuations, synchronization, or event logging mechanisms, e.g. disclosed in the European Patent Application "Service Objects with Rollback-Recovery" with the filing number EP06116367.

The major advantage is that this technique provides a self optimizing architecture for "unrestricted" distributed Web applications. The feature of decomposing a computer program while running allows to react on environmental conditions of the runtime environment, the user's needs, or the availability of certain resources like the quality of service of a network connection, etc.

The general idea of communicating whole program parts, i.e. delegating extracted parts to processing and communicating entities, is especially suited for an environment that is not under control of a software system like a peer to peer conversation. There it is advantageous if the peers itself adapt to their environmental conditions.

The inventions further simplifies software design, especially of web services or service oriented architectures since the distribution decomposition is done by a platform, automatically.

The technique improves performance and robustness; performance since the parts requiring certain resources could be transferred that these resources are directly available, and robustness since a kind of guard could keep parts under surveillance and save an application if a part goes down by transferring the part to a location providing better conditions.

The invention provides a communication protocol that can cope with morphing communication interface and that could ensure that client and server are tight synchronized.

That allows for instance in a straight forward way realizing features like running while (down-)loading an computer program.

The invention is described in detail by illustrating the contribution by the following figures, where
Fig. 1 shows a client server communication according to prior art,
Fig. 2 shows a more complex client server communication collaboration according to prior art,
Fig. 3 shows a sequence chart of a client server communication according to prior art,
Fig. 4 illustrates the computer software product according to the invention,
Fig. 5 shows a sequence chart illustrating the method according to the invention,
Fig. 6 - Fig. 12 shows intermediate snapshots in a process of performing the method according to the invention.

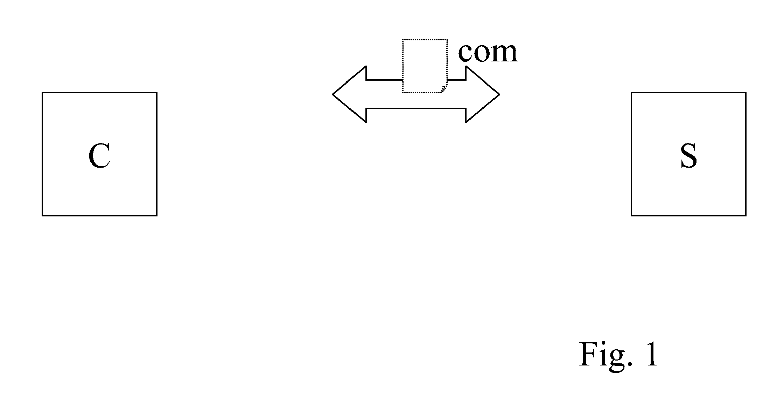

Fig. 1 shows a client C and a server S that are communicating via a protocol com, using usually request and response messages. The figure, as simple as it is shows one fact: the client and the server can be identified and remain a client and a server, as identified over their whole life.

This decomposition has its origin in user interface design. A client, a kind of front end, provides a presentation logic. A server provides the application logic as a back-end. Thus there are pre-defined protocols and roles. Weaknesses of such a decomposition are usually the lack of responsiveness that is required for interactive applications. The decomposition leads to inefficient communication and low interaction capabilities since each and every input has to be communicated between the client and the server.

Usually things are no as simple as shown in Fig. 1. The client C might need an client executable CE for working with the server S. The server S is usual not as simple as shown but build from components like a server executable SE or a server database SD, etc. The client executable CE might be loaded from the server to the client before inter-operating. Thus the server S and the client C have well defined boundaries BD. An example for a client executable CE is for instance the above mentioned widget set or a browser plug-in.

The decomposition is inefficient with respect to communication. The client and the server could not adapt themselves, i.e. balance the load between the part, here a presentation client and a computation server. The roles are fixed.

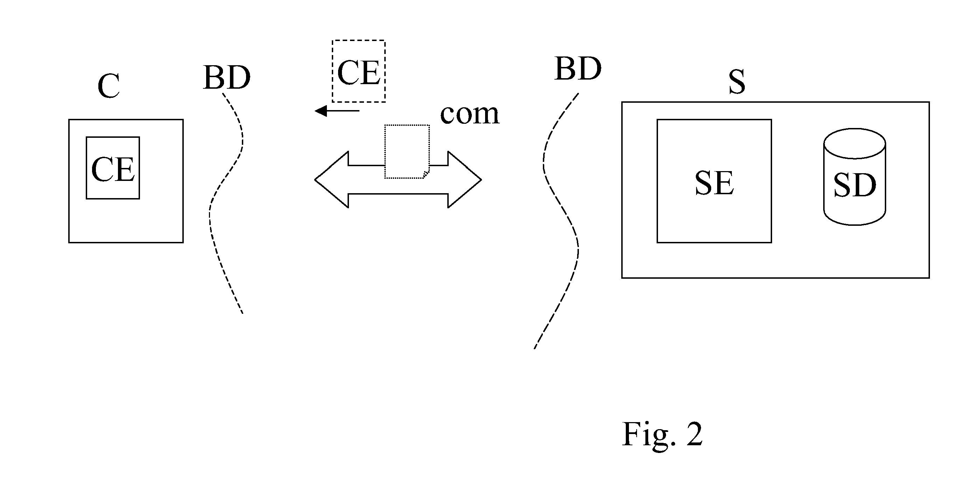

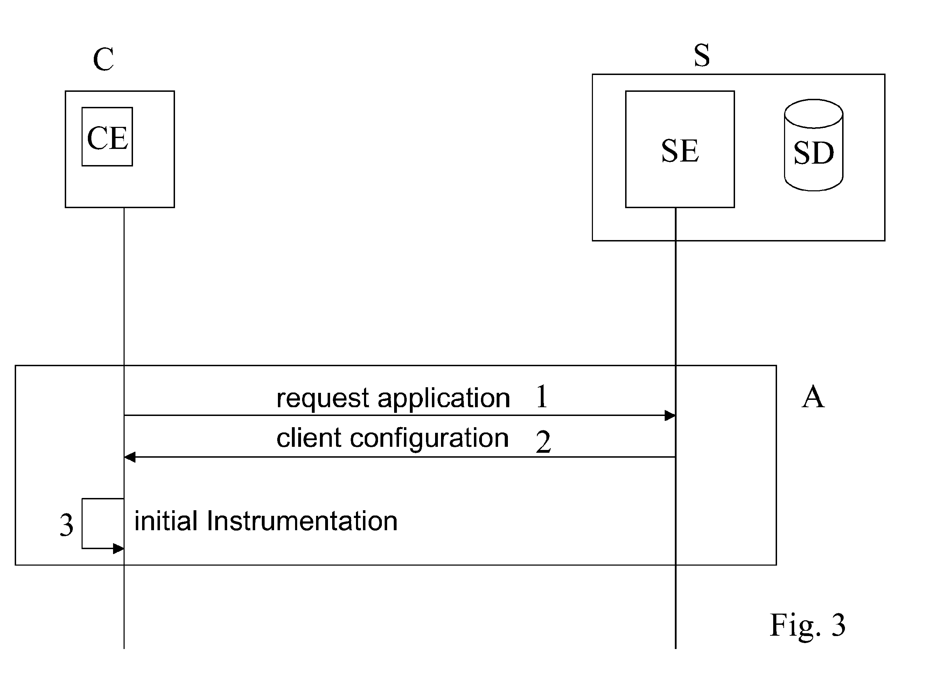

Fig. 3 shows a sequence chart corresponding to Fig. 2. The client C comprises a client executable CE. There is a boundary BD between the client C and the server S. The server also comprises a server executable SE and a server database SD. The client C and the server S communicate through the boundary BD by means of a communication protocol com.

The figure shows in advance a usual prefix A of a computation history. The prefix A comprises a first phase where the client C invokes the server S by a request 1. The server reacts by configuring 2 the client C, i.e. by providing a certain client executable CE. The client C instruments 3 itself with the provided client executable CE, such that the client C and the server S are ready to interoperate.

In this way usually web application operate. A user visits a web page. This web page provides e.g. an applet. The applet is loaded and interpreted. Suppose that there is some lack of resources - neither the client nor the server is able to react with a re-schedule of the process shown in Fig. 3.

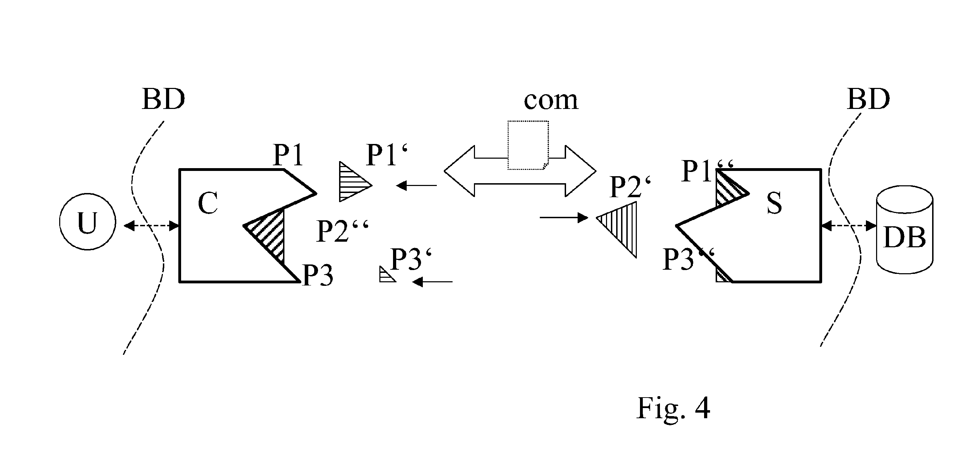

Fig 4. shows how such a re-schedule could look like. The client C and the server S should not be separated explicitly by boundaries. There are boundaries BD, e.g. to a user U via a user interface, shown by the dashed arrow between the client C and the user U, or e.g. to the aforementioned server database SD. The client C and the server S should be regarded as one piece of computer software that is decomposed into two parts - a client C and a server S. According to prior art this decomposition is done explicitly, i.e. determined while a design phase of the computer software.

The figure shows a more advanced approach with a communication of parts P1', P2' and P3'. Since the client C and the server S are considered as a whole, parts that are extracted at one side have to be integrated at the other side. In the figure as first part P1" is extracted from the server S, an extracted part P1' is transferred to the client C. There, the transferred part P1' becomes an integrated part P1. Similarly, a extracted part P2" (from the client) is transferred to the server S. There the transferred part P2' becomes an integrated part P2, etc.

The figure illustrates the concept of smoothly shifting functionalities between a client and a server. Server and client remain in a meta dialog where there configuration or instrumentation is changed continuously. The decomposition is changed in a decomposition phase. Such a decomposition is triggered by observations that can be measured during client server interactions. To make the re-decomposition happen it is necessary in further phases to transfer and to integrate components.

A main feature is the exchange and allocation of (mobile) components (parts) of an application (nomadic code). Preferably a web application configures (instruments) a client (browser), initially. Events (Interaction) drive communication and observed events trigger a coordination (decomposition) that minimizes e.g. expensive intercommunication or maximizes reactivity of the application.

The state, i.e. the current instrumentation, of such an computer software product as claimed could be maintained distributed using techniques like continuations, explicit synchronization, or event logging mechanisms. The components (parts) are preferably web services, the so-called service oriented architecture is a target for improvement with these technique.

It is suggested to generalize the communication and to allow to delegate parts between the communicating entities. The communication protocol has to cope with a morphing communication interface as illustrated by the intermediate shape between the server S and the client C in the figure. Especially the communication protocol has to ensure that client and server in this example are tight synchronized. External events might trigger re-decompositions.

The morphing interface and the morphing client and the morphing server differs from the known prior art with a static server client communication relationship and decomposition. When considering web applications consisting of Servlets and Applets or plug-ins like flash, a static client parts are known, e.g. downloading a certain plug-in. The metaphor of interoperation of a client and a server has completely changed and a server and a client have become communication entities like twins in the Einstein-Podolsky-Rosen Paradox.

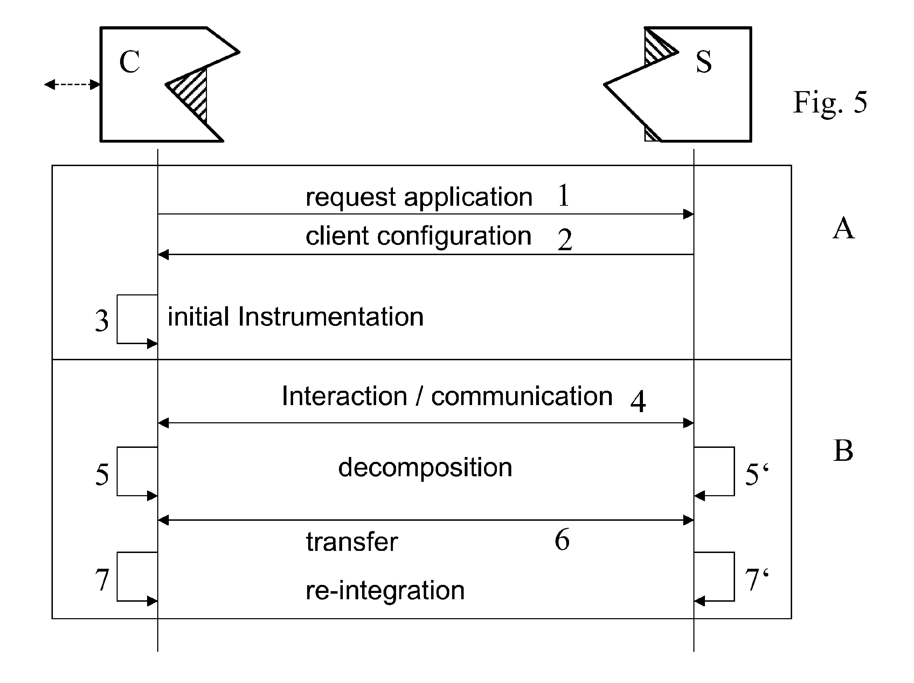

The process of morphing is illustrated by the sequence chart in Fig. 5. A second phase B is shown where between the client C and the server S interaction, i.e. communication 4 is shown. The interaction forces a re-decomposition 5, 5' (based on actual observations and insights) at the client C and the server S. Parts that should be re-located, are transferred 6 between the client and the server. Respectively received new parts are afterwards integrated in the server S and in the client C. That means the client and server relationship has been changed while running. The newly instrumented server and client should work improved.

It should be noted that this concept is not correctly modeled using a sequence chart since the collaborating entities have been changed in time. A correct notation would require a kind of logical time that is parameterized sequence chart, where the communicating entities are allowed to alter through time. The relax of notation is used only to illustrate the invention.

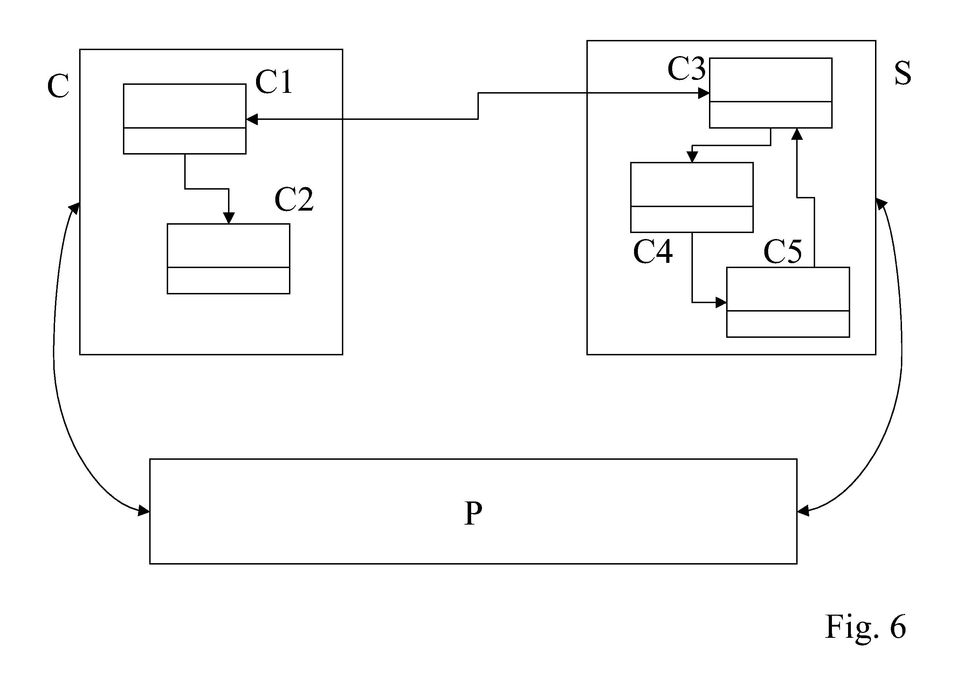

In the following figures this change of the collaborating entities is shown using snapshots of sequence and class diagrams. Let's start from an initial client server decomposition, shown in Fig 6. A server S comprises three classes C3, C4, C5. A client C comprises two classes C1, C2. The classes (as a whole) model a network application that operates on a platform P, usually a runtime environment that provides some resources like an abstract machine, or network connections or memory etc. The classes interact (also called collaboration), shown by the arrows in the diagram.

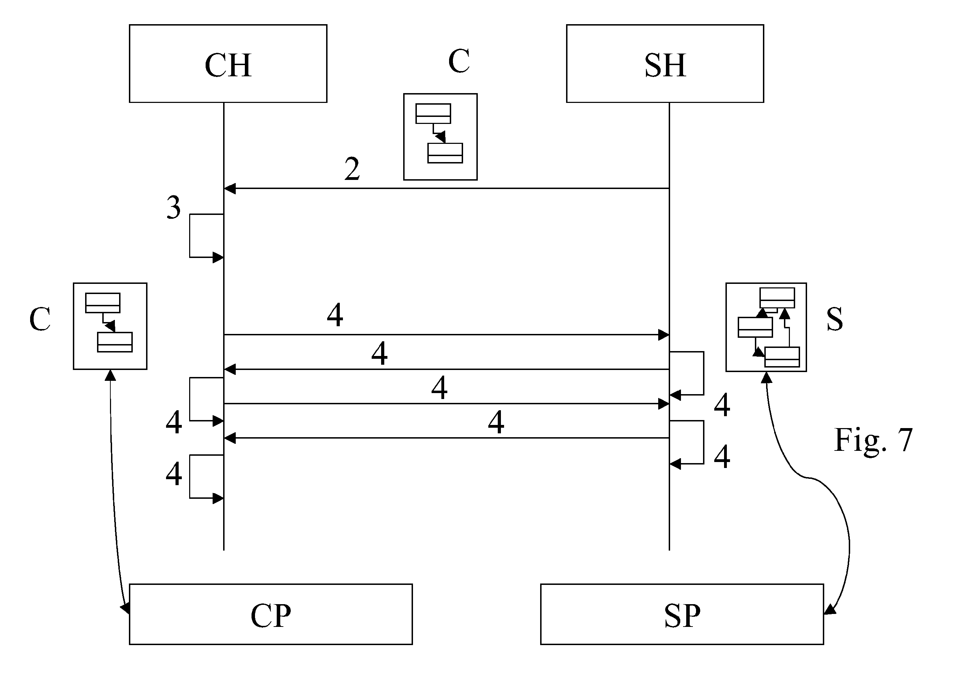

When the system is initialized, as shown in Fig. 7, a client host CH and a server host SH are needed to provide a real platform CP and SP, where the client C has usually a separate client platform CP and the server S has a server platform SP. These platforms CP and SP are used to animate the server S and the client C, respectively.

A client host CH gets 2 a client C, i.e. a well defined piece of a computer software, initially. Then the client host CH instruments 3 itself, e.g. by installing this piece of software. At this stage the client host CH is configured or instrumented with the client C, and the server host SH has the server S configured. In the following server and server host is unified as it is with client and client host.

After the initial instrumentation Server S and client C operate 4 and interoperate 4 by using and allocating resources provided by the server platform SP and the client platform CP.

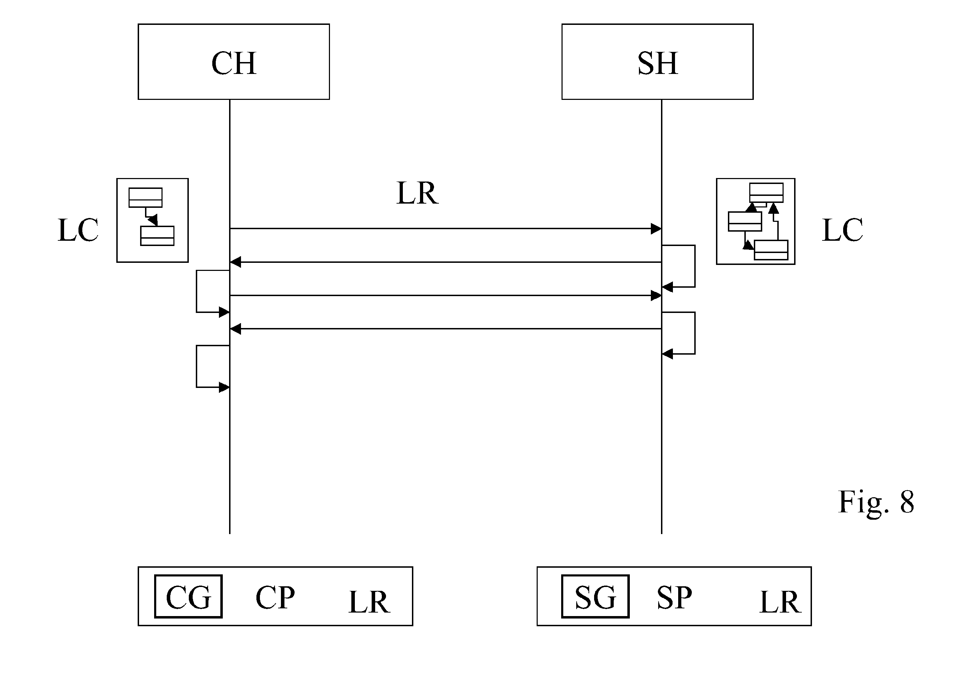

Fig. 8 shows where inefficiencies can occur while interoperating. For instance, a guard at the server SG and a guard at the client CG could observe that there is a lack of resources LR. This lack could for instance be lack of communication resources or lack of computational resources.

The guards are in the position to identify tightly collaborating computer program parts, e.g. methods that invoke each other or cyclic method invocations. This enables a guard to decide whether another decomposition performs better. For instance if a computational complex method is identified at a server that is in an overload condition and a client has remaining computational capacity, the computational method is better allocated at the client. Another example would be when a tight client server interaction requires heavy communication, to transfer the interacting part, to perform the interaction by more efficient local method invocations and to re-transfer the part after the computation back.

How parts like methods or communication could be observed is for instance disclosed in the European Patent Application "Adaptive Evolutionary Computer Software Products" having the filing number 05106615. This application also discloses a method for morphing a computer program while running.

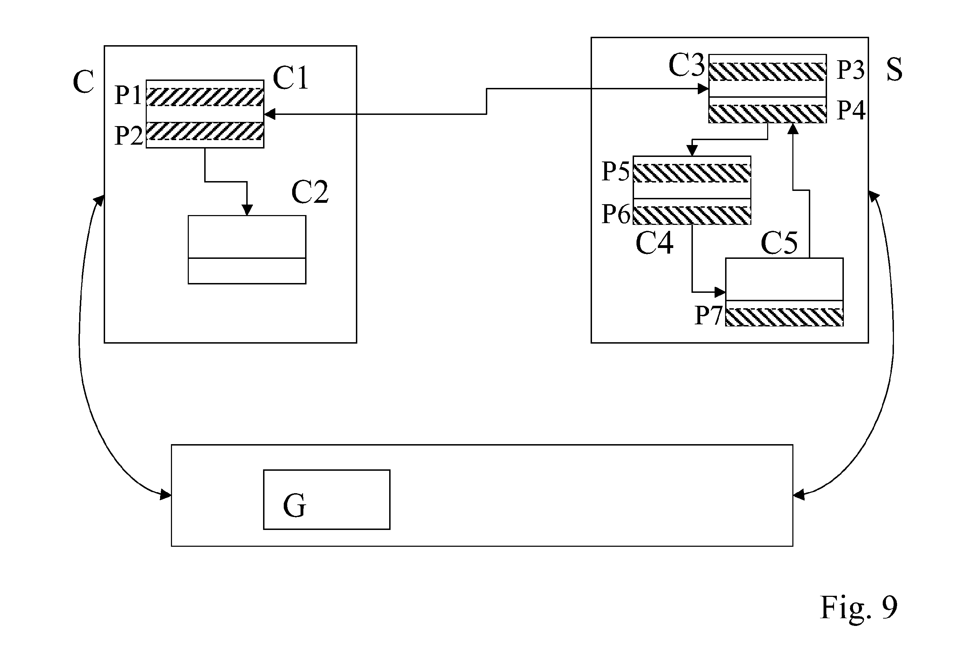

Fig. 9 shows a snap shot of identified parts where a guard inferred that it should be extracted and integrated in another component. From the client C a first part P1 of the class C1 concerning some state information, i.e. variables, and a second part P2 concerning some methods (both of class C1) have to be transferred to the server S. At the classes C3, C4, and C5 building the current server S further parts P3, ..., P7 are identified that should be transferred to the client C. In other words a guard G infers an advantageous new client server decomposition.

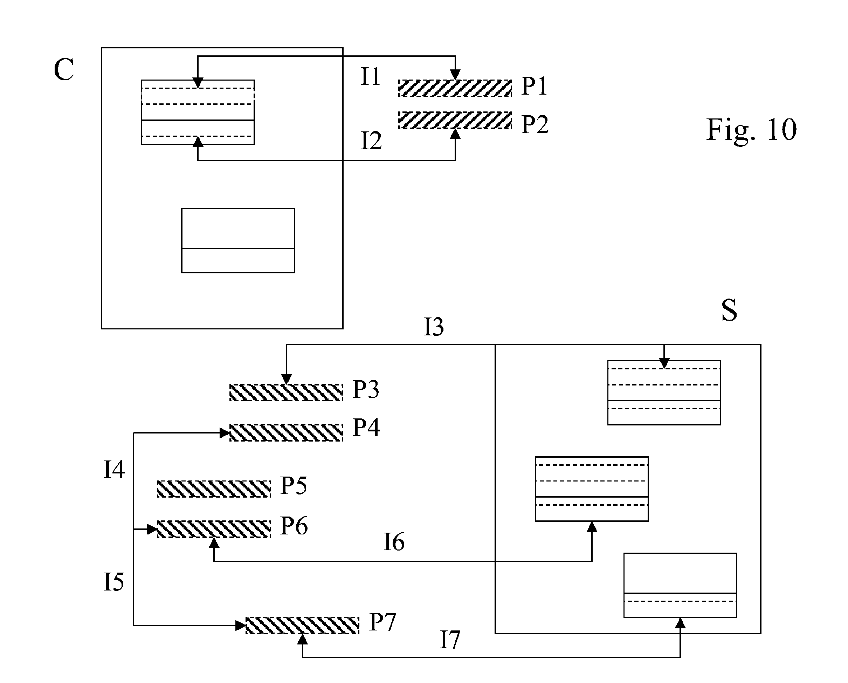

Fig. 10 shows that the identified parts P1, ..., P7 that have to be extracted, where to retain the original operational semantic is a glue between the extracted parts and the remaining parts, shown by the arrows has to be added. For extracting a variable it might be necessary to introduce remote access functions, for extracting methods remote method invocations might be suited. A good heuristic is to transfer parts that are cohesive, i.e. that have a minimal interface to a remaining part when extracted.

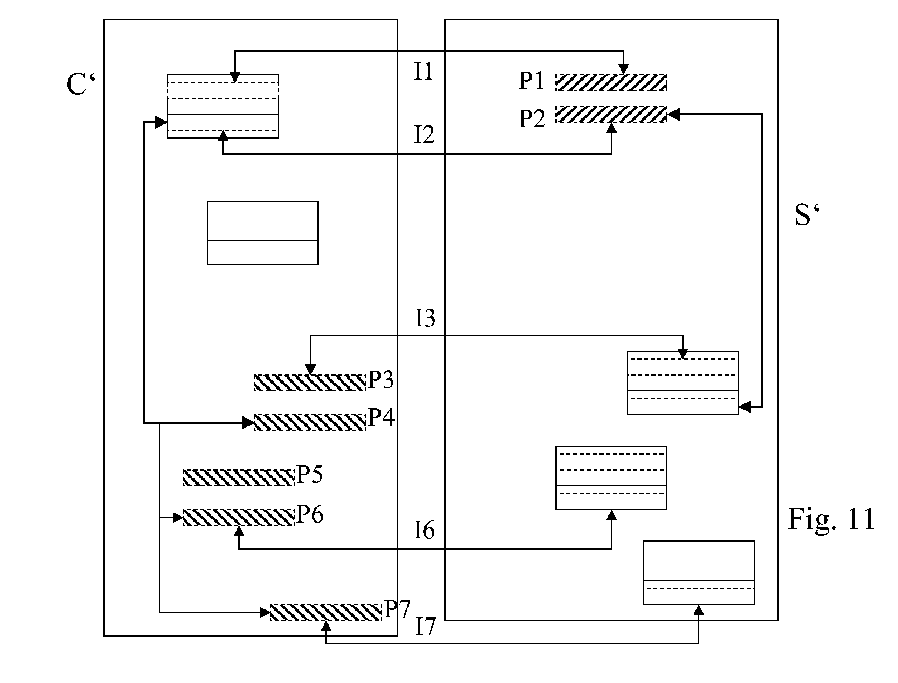

Fig. 11 shows the resulting new client server decomposition of a new client C' and a new server S'. The new server S' has integrated the parts P1 and P2 that were extracted from the client C. And, vice versa, the new client has integrated the parts P3, ..., P7 that were extracted from the server S.

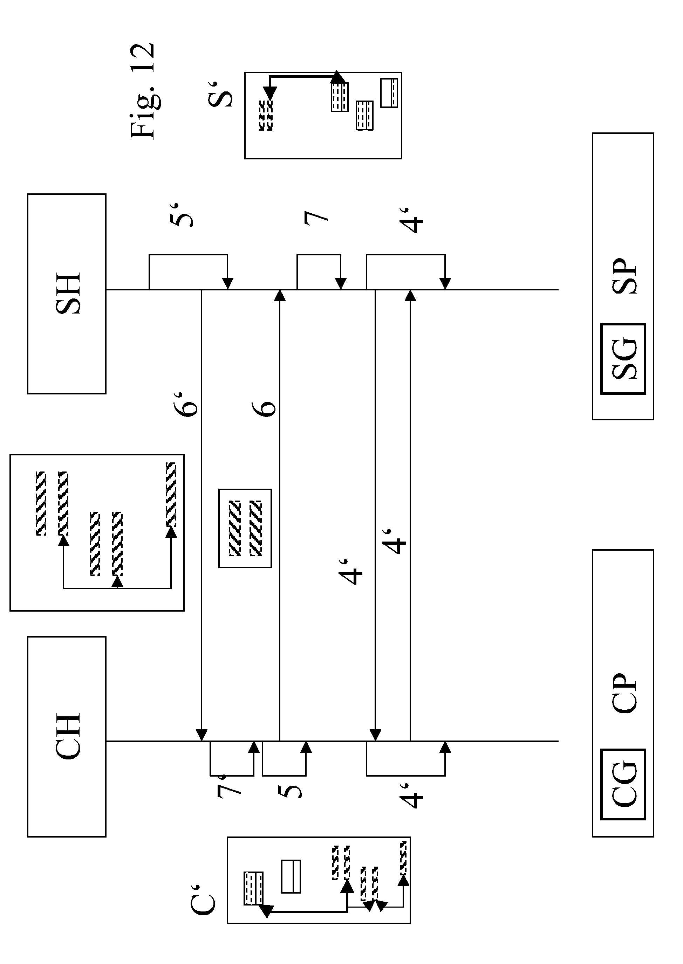

Fig. 12 shows a sequence chart illustrating the change of the parts. The parts at the client side are extracted 5, transferred 6, to the server side, and there integrated 7. Vice versa the parts identified at the server side are extracted 5', transferred 6' and integrated 7' at the client side. Afterwards the instrumentation of the client and the server is changed to the new decomposition where corresponding to Fig. 11. Finally the further, semantically equivalent interoperation 4' is optimized.

Advantageously the environment, i.e. the server platform SP and the client platform CP itself comprises a guard component SG and CG respectively, that supervise the re-decomposition process B.

A preferred use case for the claimed method is to distribute a computer software product automatically where the platform controls the decomposition, fully. That solves the vision of a software flowing through a network to the available resources to optimize a provided service .

The claimed method also contributes to "grid computing" in the sense, that the main job of a serving entity consist of providing nomadic fragments and reacting to remote method invocations, which were created at decomposition time. In this network of distributed processing elements a kind of powerful "parallelism" could be achieved.

(Mobile) components (parts) are exchanged and allocated dynamically while running (nomadic code). Preferably a web application configures (instruments) a client (browser or a user interface), initially. Events (interaction) drive communication and observed events might trigger a coordination (decomposition) that minimizes e.g. expensive intercommunication or maximizes reactivity of the application.

The semantic of the distributed system is retained by applying techniques like continuations, synchronization, and event logging mechanisms. The components (parts) are preferably web services, the so-called service oriented architecture is a target for improvement with these technique.

Performing the work on changing platform is the main characteristic of nomadic code. With respect to the environmental conditions the temporary residence on the host platform requires the ability to adapt the interface from communicating (over net) to local (direct trigger) and vice versa. As an emerging paradigm, the described nomadic coding technique could be used as a design methodology, programming style, communication alternative, negotiation mechanism, or management polices, as a move-for-any-problem solution. Despite of potential claimed advantages (reduced network load, higher concurrency for cloning and aggregation), client-server asynchrony, remote testing and deployment, dynamic interfaces upgrades), the most evoked problems are not minor (security and robustness concerns).

Preferably the programming environment allows to provide hints to a guard such as classifying objects or part of objects like variables or methods as persistent (information stored permanently), transient (information stored temporarily) or nomadic (behavior environment resistant).

It should be noted in advance that compiler techniques like dataflow analysis could assist decomposition. For instance connected components (pieces) of a dataflow graph indicate proper cohesive parts. Similarly iterations over remote invocations indicate another class of proper parts.

## Claims

1. A method for dynamic collaboration by means of transforming a computer program within a distributed system hosted at multiple sites, the method comprising the steps of:
- instrumentation (A) a target site by transferring a part (CE) of said computer program from a source site (SH) to the target site (CH), where said part (CE) collaborates with a remaining part (S) of the computer program, **characterized in that**
- the part (P1, ..., P7) is identified (Fig. 9) while the computer product (C, S) is already running,
- the part is separated (Fig. 10) from the remaining part of the computer program,
- interfaces of the part and the remaining part are modified such that the part can be hosted on the target site and can interact with the remaining part, and
- the part is transferred and integrated (Fig. 11) in a part of the computer program that is hosted on the target site.

2. The method according to claim 1, **characterized in that** the computer program indicates syntactically part candidates.

3. The method according to claim 1, **characterized in that** the computer program such that part candidates are indicated by a semantically analysis like a data flow analysis.

4. A computer software product comprising a computer program comprising parts (C, S) that can collaborate within a distributed system hosted at multiple sites, where a target site (CH) can be instrumented by transferring a part (CE) of said computer program from a source site (CS) to a target site, and the computer software product is
**characterized by** comprising computer program that is adapted to perform the steps of:
- Identifying (Fig. 9) the part while the computer product is already running,
- Separating (Fig. 10) the part from the remaining part of the computer program,
- Modifying the interfaces of the part and a remaining part such that the part can be hosted on the target site and can interact with the remaining part, and
- the part is transferred and integrated (Fig. 11) in a part of the computer program that is hosted on the target site.

5. A network element like a personal computer or a computer server **characterized by** comprising the computer software product according to claim 2.

6. A distributed system like a network of network elements according to claim 3, **characterized by** providing a communication platform that is adapted to perform the steps of the method according to claim 1.
